# EUROPEAN PATENT SPECIFICATION

(11) **EP 2 210 868 B1**
(45) Date of publication and mention of the grant of the patent: **26.09.2018**
(21) Application number: 09252592.2
(22) Date of filing: 11.11.2009
(51) Int. Cl.: C04B 41/90, C04B 35/565, C04B 35/573, C04B 35/628, C04B 35/626, C04B 35/80

(54) **Composite material**
Verbundwerkstoff
Matériau composite

(30) Priority: 12.01.2009 US 352431
(43) Date of publication of application: 28.07.2010
(73) Proprietor: Goodrich Corporation, Charlotte, NC 28217-4578 (US)
(72) Inventor: Fry, Vincent, Duarte, California 91010 (US); Kestler, Ron, Redondo Beach, California 90277 (US); Lazur, Andy, Huntington Beach, California 92646 (US)
(74) Representative: Dehns

(56) References cited:
- WO-A1-98/24737
- WO-A2-2004/108631
- US-B1- 7 427 428

## Description

### FIELD OF INVENTION

The present invention generally relates to a heat resistant composite material, and more particularly, to a method of producing a fibrous structure having a heat resistant matrix/coating.

### BACKGROUND OF THE INVENTION

Industrial applications of ceramics have become increasingly important over the last fifty years. Monolithic ceramics and cermets, however, exhibit low impact resistance and low fracture toughness. Ceramic Matrix Composites (CMCs) exhibit some useful thermal and mechanical properties and hold the promise of being outstanding materials for use in high temperature environments and/or in heat sink applications. Ceramic Matrix Composites generally comprise one or more ceramic materials disposed on or within another material, such as, for example, a ceramic material disposed within a structure comprised of a fibrous material. Fibrous materials, such as carbon fiber, may be formed into fibrous structures suitable for this purpose.

CMCs have many industrial applications, including in thermal protection systems. For example, various aircraft, missile and spacecraft components require materials to operate in high temperature environments and/or provide heat sink properties. Among other components, aircraft engine and turbine components contain thermal protection systems and typically have a need for components that can withstand temperatures above 1100°C (2000°F). Thus, materials that can withstand temperatures above 1100°C (2000°F) may be of use in aircraft afterburner systems and other internal and external engine applications and thermal barrier applications.

However, many fibrous materials oxidize at high temperatures, and thus fibrous material containing composite materials need to be developed to resist such oxidation at such temperatures. For example, carbon fiber oxidizes at high temperatures, such as at temperatures above 1100°C (2000°F). Moreover, many conventional carbon fiber composite materials exhibit cracking during changes in temperature due to the associated expansion and contraction of the material. Oxygen may enter the material structure through these cracks, exacerbating oxidation of the material. Accordingly, there is a need for a composite material that can withstand high temperatures without oxidizing.

### SUMMARY OF THE INVENTION

According to a first aspect, the present invention provides a composite material comprising: a fibrous structure at least partially impregnated first with a carbon interface material, followed by a first ceramic material comprising silicon carbide; followed by a ceramic mixture comprising at least two of silicon carbide, boron carbide, carbon-rich boron carbide, carbon, zirconium carbide, zirconium oxide, hafnium carbide, tantalum carbide, tantalum nitride, or silicon nitride; and followed by a metal alloy comprising silicon; a coating disposed at least partially on an outer surface of said fibrous structure, said coating comprising a coating of boron carbide followed by a coating of silicon carbide.

In various embodiments, a composite material is provided that withstands temperatures above 650°C (1200°F) while being resistant to oxidation. Moreover, composite materials in accordance with various embodiments may withstand temperature changes from typical atmospheric temperatures (e.g., from about minus 34°C (minus 30°F) to about 54°C (about 130°F)), to high temperatures (e.g., above 1100°C (2000°F)) while being resistant to oxidation.

The coating disposed on a surface of the impregnated fibrous structure optionally comprises a third ceramic material.

According to a second aspect, the present invention provides a method comprising: at least partially impregnating a fibrous structure first with a carbon interface material, second with a first ceramic material comprising silicon carbide through CVI, third with a ceramic mixture through slurry casting wherein said ceramic mixture comprises silicon carbide and boron carbide, and fourth with a metal alloy comprising silicon; and coating a surface of said at least partially impregnated fibrous structure with a first ceramic coating material followed by a second ceramic coating material.

The fibrous structure may optionally be coated with a third ceramic coating material.

According to a third aspect, the present invention provides a product produced by a process comprising the steps of: at least partially impregnating a fibrous structure comprising carbon fiber first with a carbon interface material, second with silicon carbide through CVI; third with a ceramic mixture comprising silicon carbide and boron carbide through slurry casting, and fourth with a silicon metal mixture after said impregnating with said ceramic mixture; and coating a surface of the at least partially impregnated fibrous structure with boron carbide, followed by coating said surface with silicon carbide.

The fibrous structure may be impregnated with a ceramic mixture comprising silicon carbide, boron carbide and carbon. The process may also include coating the surface of the fibrous structure with a third ceramic coating.

### BRIEF DESCRIPTION OF THE DRAWINGS

FIG 1 is a schematic of an angle-interlock preform used in an exemplary embodiment;
FIG 2 is a warp direction cross section of an exemplary embodiment;
FIG 3 is a cross sectional view of an exemplary embodiment depicting a group of individual fibers; and
FIG 4 is an additional cross sectional view of an exemplary embodiment depicting a group of individual fibers.

### DETAILED DESCRIPTION

The detailed description of exemplary embodiments of the invention and other examples herein makes reference to the accompanying drawings, which show exemplary embodiments by way of illustration and its best mode. While these exemplary embodiments and examples are described in sufficient detail to enable those skilled in the art to practice the invention, it should be understood that other embodiments may be realized and that logical, chemical and mechanical changes may be made without departing from the scope of the invention as defined in the claims. Thus, the detailed description herein is presented for purposes of illustration only and not of limitation.

As noted above, composite materials in accordance with various embodiments and used in thermal protection systems are suited to withstand temperatures above 1200°F. "Composite materials," as used herein, comprise a structural component and another component interspersed throughout the structure. One embodiment of such structural component includes fibrous materials, such as carbon fiber, silicon carbide fiber, alumina fiber, and glass fiber, among others. Fibrous materials are often lightweight and can be shaped and layered in a variety of ways prior to impregnation and/or coating with other materials, thus realizing the physical properties of both the fibrous structure and the materials impregnated therein. Ceramics may be used for creating a matrix within the fibrous structure that provides various beneficial physical properties.

Additionally, in general, composite materials in accordance with various embodiments are suitable for use in thermal protection systems as such composite materials are resistant to oxidation, despite the expansion and contraction associated with changes in temperature. Various coatings in accordance with various embodiments may be used to prevent or minimize oxidation, and decrease the risk of oxygen penetrating into the composite material. Moreover, coatings in accordance with various embodiments may move to partially or fully fill in the cracks, preventing or minimizing the entry of oxygen into the material. This effect may be especially notable when boron carbide or carbon-rich B₄C and silicon carbide are used in both the composite material and one or more of the coating materials.

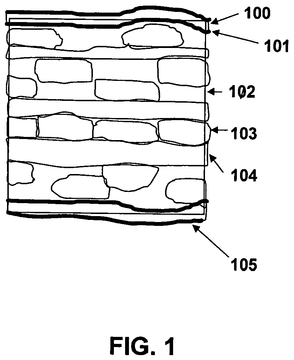

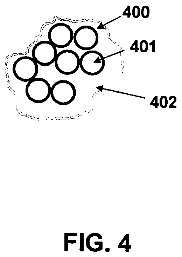

Now, referring to Figures 1-4, a composite material, in accordance with various embodiments, includes fibrous structures comprised of various individual fibers. As mentioned above, examples of fibers include carbon fiber, silicon carbide fiber, alumina fiber, glass fiber, and the like. Carbon fiber may be pitch based or pan based and may be comprised of individual carbon filaments having a diameter on the order of about 5 microns to about 10 microns, although any diameter may be compatible with the materials described herein.

Carbon fibers are often manufactured and sold in tows, or groups of filaments, arranged in a variety of numbers of filaments per tow. Generally speaking, there may be any number of filaments per tow, but various embodiments of the present invention comprise about 1,000 filaments per tow carbon fiber, 3,000 filaments per tow carbon fiber, 6,000 filaments per tow carbon fiber, and 12,000 filaments per tow carbon fiber. In various exemplary embodiments described herein, Cytec Industries THORNEL T300 carbon fiber in lk, 3k and 6k tows may be used. THORNEL T300 may be purchased from Cytec Industries, 5 Garret Mountain Plaza, West Paterson, New Jersey 07424. However, any aerospace quality carbon fiber may be used.

A fibrous structure may be constructed in any suitable manner. For example, a fibrous structure may be constructed by conventional textile production processes, such as, for example, by weaving and braiding. As one may appreciate, the versatility of textile production may lead to many structures that are suitable for composite materials.

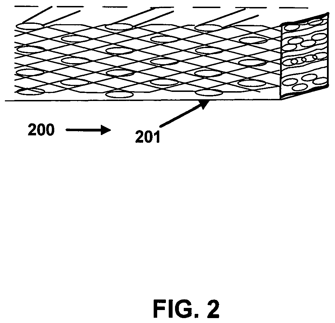

As used herein, a fibrous structure may also be referred to as a "preform." In various embodiments, an angle-interlock preform construction woven of 3,000 filaments per tow (3k) carbon fiber in a 3k-3k-309 ST configuration may be used (as exemplified in FIG 2). In such embodiments, an about 60% warp 200, 103 at 20° with 40% fill 3k tow 201, 104 will provide about 40% by volume fiber. In such embodiments, the angle interlock may have staggered pick columns with six picks at 10-picks per cm (26-picks per inch), though many applications of infiltrated preforms use from 5 to 9-picks per cm (12 to 22-picks per inch), and fiber volume can range from approximately 25% to 45%.

In other embodiments, an angle-interlock preform construction woven of about 3,000 (3k) and 6,000 (6k) filaments per tow carbon fiber in a 3k6k configuration may be used. In such embodiments, there may be a 60% warp of 3k tow at ±15° with 40% fill of 6k tow. In embodiments where a 3k6k configuration is used, the overall preform structure may not be as dense as in 3k3k configurations. Accordingly, a 3k6k configuration may allow for increased ability to infiltrate as compared to a 3k3k configuration. Various mixtures of 1k-3k and 6k may be used to construct the preform.

In various embodiments, warp tows are configured to run through the thickness of the overall structure. Such configurations may improve the balance of mechanical and thermal properties of the composite, thus providing improved structural integrity.

As one skilled in the art would appreciate, a variety of fabrication methods may be used to construct a suitable preform. For example, in various embodiments, suitable preform configurations include angle interlock, fabric layup, lightly needled pan fiber, sandwich type structures having fabric over a core such as felt, knit, knit hybrid, 3d braid, and non woven structures such as filament wound.

Carbon fiber may be heat treated to better withstand higher temperatures. For example, carbon fiber tows may be heat treated prior to being fabricated into a fibrous structure. Heat treatment may also be performed after fabrication of a fibrous structure. For example, it may be beneficial to heat treat fibrous structures or carbon fiber tows in a temperature equal or close to the maximum temperature the structure encounters during use, though heat treatment may also be beneficial if performed at temperatures above or below the maximum temperature the structure encounters during use. In various embodiments, carbon fiber tows are heat treated at a temperature in the range of 1100°C to 2200°C (2000°F to 4000°F) prior to fabrication of a fibrous structure. In various embodiments described herein, a fibrous structure is heat treated at a temperature in the range of 1100°C to 2200°C (2000°F to 4000°F).

Various methods of impregnating a fibrous structure may be used in accordance with various embodiments. In this regard, impregnating a fibrous structure may be accomplished via any method for partially or fully infiltrating or penetrating a fibrous structure with another material. For example, polymer resin (for conversion to carbon and/or ceramic material), chemical vapor infiltration (CVI), melt infiltration (MI), and slurry casting (SC) may be used, alone or in various combinations, to partially or fully impregnate a fibrous structure with a matrix or oxidation inhibitors.

Methods of CVI typically include partially or fully exposing a fibrous structure to a vapor containing a material such that the vapor partially or fully infiltrates or penetrates the fibrous structure. CVI can be accomplished under various suitable temperature, pressure, or other operating parameters. For example, CVI may be accomplished at high temperatures, for example above about 815°C (1500°F) but below 1650°C (3000°F).

Among the various materials that may be used in conjunction with CVI for partially or fully infiltrating or penetrating a fibrous structure are carbon materials (including carbon black, pyrolytic carbon and polymer derived carbon), silicon carbide (SiC), including polymer derived SiC, boron carbide (B₄C), and various mixtures thereof. In general oxidation inhibiting additives can be used including carbides, oxides and nitrides of boron, silicon, zirconium, niobium, tungsten, hafnium, titanium, and tantalum. Materials used in conjunction with CVI may be mixed with a variety of additives, such as wetting agents and dispersants. For example, DISPERBYK from BYK Additives and Instruments may be used as an additive. In particular, BYK-156 (also known as DISPERBYK-156) may be obtained from BYK USA, 524 South Cherry Street, Wallingford, Conn. 06492. The B₄C used in conjunction with CVI in accordance with various embodiments may be purchased under the trademark TETRABOR, produced by Elektroschmelzwerk Kempten GmbH of Kempten, Germany and distributed in the USA by Wacker Chemical.

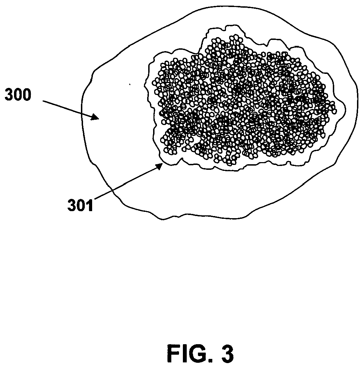

In various embodiments, a fibrous structure may be partially or fully impregnated or coated with a carbon interface material in any suitable manner, for example, by CVI. A carbon interface material may comprise graphite, pyrolytic carbon, and/or other suitable forms of carbon. A carbon interface material may be partially or fully applied concurrent with, prior to or subsequent to a heat treatment step. The application of an interface material to a fiber may be referred to as "coating" the fiber as the interface material adheres to the fiber surface. Application of a carbon interface material to a fibrous structure preform may also be referred to as impregnation, as when an interface material is applied to a preform, the interface material penetrates and/or infiltrates the preform structure to coat the constituent fibers. An interface material coating the fibers of a preform are shown in FIG 3. It should be noted that coating a fibrous structure, however, typically denotes a coating applied only to a surface of the fibrous structure itself and not necessarily coating the individual constituent fibers of a fibrous structure. Impregnation may leave a variety of interface material thickness on the fibrous structure such as 0.1 micron to 0.7 micron. For example, in various embodiments, about 0.2 micron to 0.5 micron thicknesses of carbon interface material 400 are created during impregnation.

In an exemplary embodiment, a fibrous structure is partially or fully impregnated with silicon carbide (SiC) via a CVI step. Precursors include a range of chlorsilanes such as methyltrichlorosilane or dimethyldicholorosilane with hydrogen. Processing may occur at high temperature, for example, from about 870°C (1600°F) to about 1300°C (2400°F). Processing may occur in a vacuum, with pressures ranging from about 0 kPa to about 67 kPa (about 0 mmHg to about 500 mmHg).

In various embodiments, a fibrous structure may be partially or fully impregnated by slurry casting (SC) and melt infiltration (MI). SC generally comprises the application of a slurry into a preform fibrous structure that is subject to a vacuum, plaster casting, or other techniques that assist in impregnation of a slurry into the pores of a fibrous structure. MI generally comprises the process used to partially or fully impregnate a fibrous structure with material by melting and flow of molten metal into the fibrous structure, typically under a vacuum and at high temperature. For example, vacuum pressures range from about 0 kPa to about 7 kPa (about 0 mmHg to about 50 mmHg) and temperatures above the melting point of the metal employed. For example, if melt infiltration is performed using pure silicon, such temperatures would be above 1400°C (2600°F).

For example, an aqueous slurry comprising SiC, B₄C, and appropriate wetting agents and dispersants such as DISPERBYK-156 may be prepared for slurry casting. In various embodiments, a SC composition includes a 50% by weight ratio of SiC particulate (such as that available from Saint-Gobain Corporation, P.O. Box 860, 750 E. Swedesford Road, Valley Forge, PA 19482-0101), TETRABOR 3000F (submicron B₄C), and approximately 4% by weight of fine carbon black is added. In various embodiments, the mixture is diluted by water and about 2.5% by weight DISPERBYK-156 to obtain a mixture having about 50% by weight total solids. In other embodiments, the SC composition includes a greater ratio of B₄C to SiC. For example, a 75% by weight ratio of B₄C to SiC may be used. In further embodiments, no SiC particulate is used in the SC composition. The powder particles may be of any appropriate diameter. For example, particles may have submicron diameters, although diameters of 1 micron and above may also be used. In an exemplary embodiment, the fibrous structure is placed on a plaster mold and slurry cast with the slurry to impregnate the fibrous structure in a partial vacuum at ambient temperature or at elevated pressure. After SC, the preform is dried. Drying may occur at a variety of temperatures and time periods, including about 80°C for about 1 hour.

MI may be performed using silicon, and/or a silicon metal mixture or silicon alloy. The MI mixture may include a binder, such as a phenolic binder. For example, a silicon alloy comprised of silicon, carbon, and boron may be used with MI. In such an example, a phenolic binder may be used in conjunction with a curing period to achieve a rigid resultant structure. In such an example, a silicon alloy may comprise about 90% to 96% by weight elemental silicon, 3%-8% by weight elemental boron, and 0.5% to 3.0% by weight elemental carbon. Generally, any melt temperature sufficient to melt a material used in conjunction with MI may be used during an MI process, and generally ranges from about 1100°C (2000°F) to about 1650°C (3000°F). In various embodiments using a silicon metal mix, a melt temperature of about 1400°C (2550°F) to 1650°C (3000°F) is used.

Hold times sufficient to allow for sufficient impregnation vary depending on a variety of operating parameters. For example, in various embodiments using a silicon metal mix, a hold time of about one hour may be used. Specifically, in various embodiments using a silicon metal mix, a hold time of one hour, and a melt temperature of about 1400°C (2550°F) to 1650°C (3000°F), less than 6 microns of the CVI SiC reacts with the molten silicon alloy. In various embodiments, a matrix 102, 300 is formed by the SC and MI steps.

Various methods of partially or fully coating a fibrous structure may also be used in accordance with various embodiments. Coating a fibrous structure may generally be accomplished via any method for partially or fully coating and/or depositing a coating material on a fibrous structure. For example, chemical vapor deposition (CVD) may be used to coat a fibrous structure. CVD is generally a process of subjecting a substrate to a material in vapor form, resulting in a deposition of the material on the substrate. CVD may be performed at various temperatures and pressures, and for various periods of time. In various embodiments, the CVD parameters are the same as those described above in relation to CVI, although temperatures may range from about 930°C to 1500°C (1700°F to 2800°F) and pressures may range from 0Pa to 100kPa (0atm to 1atm).

In various embodiments, various coating processes and materials are applied to the fibrous structure. In coated embodiments, the composition and order of coating application may contribute to the overall oxidation resistance of the resultant material. For example, coating materials may comprise SiC alone or a coating of SiC and B₄C or carbon-rich B₄C. In various embodiments, a coating of SiC may be deposited via CVD and may be of various thicknesses, for example from about 2.5µm (0.1 mil) to about 180µm (7 mil). In various embodiments, a 12.5µm (0.5 mil) coating of B₄C is deposited via CVD 101.

In various embodiments, a coating of SiC and B₄C may be applied. The SiC and B₄C coating may be of various thicknesses for example, from about 2.5µm (0.1 mil) to about 25µm (1 mil) of B₄C and from about 2.5µm (0.1 mil) to about 180µm (7 mil) of SiC. For example, in various embodiments, a 12.5µm (0.5 mil) coating of B₄C and 50µm (2 mil) coating of SiC are deposited via CVD 100. In various embodiments, the coatings are deposited sequentially under a vacuum without cooling in a furnace. Thickness may be determined by fibrous structure weight, optical microscopy of witness material, destructive evaluation of a fibrous structure, or fibrous structure thickness change. In various embodiments, a 12.5µm (0.5 mil) coating of B₄C and a 50µm (2 mil) coating of SiC are deposited via CVD. In a portion of those embodiments, a 125µm (5 mil) coating of SiC is then deposited by CVD.

In various embodiments, a fibrous structure may also be partially or fully glazed with glass. Glazing may help seal in various coatings and protect against coating degradation. Generally, glazing is any process that deposits glass onto a fibrous structure and may occur on any surface of the fibrous structure. Glazing may be accomplished by spraying or painting. A glass coating 105 is shown in FIG 1. In various embodiments, a glass glaze is about 75µm (3 mils) in thickness, although the glaze may range from 2.5µm (0.1mil) to 250µm (10mil). The fibrous structure may be fired in a kiln at temperature above about 760°C (1400°F) with a controlled flow of air. Any suitable glaze composition may be used. For example, a glaze may have nonvolatile solids of 60%-70% by weight. Also for example, a glaze may have a viscosity/flow determined by a Number 2 Zahn cup drain time of from about 18 to about 25 seconds at 25°C.

The above description being noted, examples of composite materials in accordance with various embodiments of the present invention follow.

### EXAMPLE 1

In an example illustrating some features of the invention, an angle-interlock fibrous structure preform woven of 3,000 filaments per tow carbon fiber in a 3k-3k-309 ST configuration was used. The fibrous structure preform was configured with a 60% warp at 20° with 40% fill all 3k tow will provide 40% by volume fiber. The fibrous structure preform was configured with staggered pick columns, six picks at 10-picks per cm (26-picks per inch). The preform was subjected to heat treatment at approximately 1300°C (2400°F) and a carbon interface material was applied after heat treatment to a thickness of between 0.2 microns and 0.5 microns. The preform was impregnated by SiC CVI. The preform was subjected to impregnation via vacuum assisted SC on a plaster mold. The aqueous slurry was comprised of a 50% ratio of SiC particulate and TETRABOR B₄C, 2.5% by weight DISPERBYK-156, and approximately 4% by weight of fine carbon black.
The slurry had approximately 50% by weight total solids. The preform was impregnated via MI using a silicon metal mixture at a temperature over 1400°C (2550°F) for more than one hour.

### EXAMPLE 2

In another example, an angle-interlock preform construction woven of 3,000 (3k) and 6,000 (6k) filaments per tow carbon fiber in a 3k6k configuration was used. In that embodiment, there was a 60% warp of 3k tow at ±15° with 40% fill of 6k tow. The preform was subjected to heat treatment at approximately 1300°C (2400 °F) and a carbon interface material was applied after heat treatment to a thickness of between 0.2 microns and 0.5 microns. The preform was impregnated by SiC CVI. The preform was subjected to impregnation via vacuum assisted SC on a plaster mold. The aqueous slurry was comprised of a 50% ratio of SiC particulate and TETRABOR B₄C, 2.5% by weight DISPERBYK-156, and approximately 4% by weight of fine carbon black. The slurry had approximately 50% by weight total solids. The preform was impregnated via MI using a silicon metal mixture at a temperature over 1400°C (2550°F) for more than one hour.

### EXAMPLE 3

In yet another example, the fibrous structure of EXAMPLE 1 is coated with a 130µm (5 mil) coating of SiC deposited via CVD.

### EXAMPLE 4

In an exemplary embodiment of the invention, the fibrous structure of EXAMPLE 1 is coated with a 12.5µm (0.5 mil) coating of B₄C and 50µm (2 mil) coating of SiC deposited via CVD.

### EXAMPLE 5

In another exemplary embodiment of the invention, the fibrous structure of EXAMPLE 1 is coated with a 12.5µm (0.5 mil) coating of B₄C and 50µm (2 mil) coating of SiC are deposited via CVD. The fibrous structure is coated with a 125µm (5 mil) coating of SiC deposited via CVD.

### EXAMPLE 6

In another example, the fibrous structure of EXAMPLE 2 is coated with a 125µm (5 mil) coating of SiC deposited via CVD.

### EXAMPLE 7

In another exemplary embodiment of the invention, the fibrous structure of EXAMPLE 2 is coated with a 12.5µm (0.5 mil) coating of B₄C and 50µM (2 mil) coating of SiC deposited via CVD.

### EXAMPLE 8

In another exemplary embodiment of the invention, the fibrous structure of EXAMPLE 2 is coated with a 12.5µm (0.5 mil) coating of B₄C and 50µm (2 mil) coating of SiC are deposited via CVD. The fibrous structure is coated with a 125µm (5 mil) coating of SiC deposited via CVD.

### EXAMPLE 9

In another exemplary embodiment of the invention, the fibrous structure of EXAMPLE 4 is glazed with glass.

### EXAMPLE 10

In another exemplary embodiment of the invention, the fibrous structure of EXAMPLE 5 is glazed with glass.

### EXAMPLE 11

In another exemplary embodiment of the invention, the fibrous structure of EXAMPLE 7 is glazed with glass.

### EXAMPLE 12

In another exemplary embodiment of the invention, the fibrous structure of EXAMPLE 8 is glazed with glass.

### EXAMPLE 13

In another example, the fibrous structure of EXAMPLE 3 is glazed with glass.

### EXAMPLE 14

In yet another example, the fibrous structure of EXAMPLE 6 is glazed with glass.

Various products of EXAMPLES 1 through 14 were subjected to study. TABLE 1 shows the volume percentage characteristics of both examples. Further study revealed both examples to have an interlaminar tensile strength of approximately 90 MPa (13 Ksi). Ultimate tensile strength in the warp direction in various products of EXAMPLES 1 through 14 is 240 MPa (35 Ksi) to 350 MPa (51Ksi). Open porosity was less than 8% before surface coating was applied. TABLE 2 shows various representative physical properties of various products of EXAMPLES 1 through 14.

**TABLE 1**

| Volume % Characteristics | | | | | |
|---|---|---|---|---|---|
| EXAMPLE | T300 fiber | CVI carbon interface / SiC | SiC+B₄C | MI silicon | Open porosity |
| 3k6k (Example 1) | 39.6 | 25.8 | 11.4 | 15.2 | 8 |
| 3k6k (Example 2) | 36.1 | 26.3 | 16.1 | 15.1 | 6.4 |

**TABLE 2**

| Representative Panels | | | | | | | | | | |
|---|---|---|---|---|---|---|---|---|---|---|
| Tow configuration | Vol% fiber | UTS-0°, MPa (Ksi) | Modulus, MSI | Number of tests | UTS-00°, MPa (Ksi) | Number of tests | SBS, MPa (Ksi) | Number of tests | ILT, MPa (Ksi) | Number of tests |
| 3k3k | 40 | 350 (50.8) | 6.3 | 6 | 220 (31.9) | 4 | 63 (9.2) | 6 | 88.9 (12.9) | 6 |
| 3k6k | 35 | 243 (35.3) | 8.0 | 6 | 141 (20.5) | 6 | 61 (8.9) | 6 | 93.1 (13.5) | 6 |

One skilled in the art will appreciate that various embodiments have uses in a variety of industrial applications. For example, industrial applications desiring a material that can withstand temperatures in air of over about 1100°C (2000°F) may benefit from the embodiments. In this regard, many components in aerospace components or systems may benefit from the embodiments. For example, products fabricated in accordance with various embodiments may benefit aircraft afterburner seals. Afterburner seals may be formed in a variety of shapes and sizes. For example, afterburner seals may be in the range of from about 2.5 to 91cm (1 to 36 inches) long, from about 2.5 to 91cm (1 to 36 inches) wide and from about 0.13cm to 5cm (0.05 inches to 2 inches) thick. Additionally, in various embodiments, materials may include various holes, slots, or depressions.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims.

## Claims

1. A composite material comprising:
a fibrous structure at least partially impregnated first with a carbon interface material, followed by a first ceramic material comprising silicon carbide; followed by a ceramic mixture comprising at least two of silicon carbide, boron carbide, carbon-rich boron carbide, carbon, zirconium carbide, zirconium oxide, hafnium carbide, tantalum carbide, tantalum nitride, or silicon nitride; and followed by a metal alloy comprising silicon;
a coating disposed at least partially on an outer surface of said fibrous structure, said coating comprising a coating of boron carbide followed by a coating of silicon carbide.

2. The material of claim 1, wherein said coating further comprises glass.

3. The material of claim 1, wherein said metal alloy comprises a silicon alloy.

4. The material of claim 1, wherein said fibrous structure is comprised of at least one of a carbon fiber or a silicon carbide fiber.

5. A method comprising:
at least partially impregnating a fibrous structure first with a carbon interface material, second with a first ceramic material comprising silicon carbide through CVI, third with a ceramic mixture through slurry casting wherein said ceramic mixture comprises silicon carbide and boron carbide, and fourth with a metal alloy comprising silicon; and
coating a surface of said at least partially impregnated fibrous structure with a first ceramic coating material followed by a second ceramic coating material.

6. The method of claim 5, wherein said metal alloy comprises a silicon alloy.

7. The method of claim 5, further comprising coating said surface of said fibrous structure with a third ceramic coating material.

8. The method of claim 5, further comprising glazing said at least partially impregnated fibrous structure with a glass coating.

9. The method of claim 5, wherein said fibrous structure is comprised of carbon fiber.

10. A product produced by a process comprising the steps of:
at least partially impregnating a fibrous structure comprising carbon fiber first with a carbon interface material, second with silicon carbide through CVI, third with a ceramic mixture comprising silicon carbide and boron carbide through slurry casting, and fourth with a silicon metal mixture after said impregnating with said ceramic mixture; and
coating a surface of the at least partially impregnated fibrous structure with boron carbide, followed by coating said surface with silicon carbide.

11. The product of claim 10, further comprising coating said surface with silicon carbide.

12. The product of claim 10, further comprising glazing said surface with a glass coating.

## Patentansprüche

1. Verbundwerkstoff, der Folgendes umfasst:
eine Faserstruktur, die zuerst wenigstens teilweise mit einem Kohlenstoffgrenzflächenmaterial imprägniert ist, gefolgt von einem ersten Keramikmaterial, das Siliziumcarbid umfasst, gefolgt von einer Keramikmischung, die wenigstens zwei umfasst von Siliziumcarbid, Borcarbid, kohlenstoffreichem Borcarbid, Kohlenstoff, Zirkoniumcarbid, Zirkoniumoxid, Hafniumcarbid, Tantalcarbid, Tantalnitrid oder Siliziumnitrid, und gefolgt von einer Metalllegierung, die Silizium umfasst;
eine Beschichtung, die wenigstens teilweise auf einer Außenfläche der Faserstruktur angeordnet ist, wobei die Beschichtung eine Borcarbidbeschichtung, gefolgt von einer Siliziumcarbidbeschichtung umfasst.

2. Material nach Anspruch 1, wobei die Beschichtung ferner Glas umfasst.

3. Material nach Anspruch 1, wobei die Metalllegierung eine Siliziumlegierung umfasst.

4. Material nach Anspruch 1, wobei die Faserstruktur aus wenigstens einem von einer Kohlenstofffaser oder einer Siliziumcarbidfaser besteht.

5. Verfahren, das Folgendes umfasst:
wenigstens teilweises Imprägnieren einer Faserstruktur erstens mit einem Kohlenstoffgrenzflächenmaterial, zweitens mit einem ersten Keramikmaterial, das ein Siliziumcarbid umfasst, mittels chemischer Dampfphaseninfitration (CVI), drittens mit einer Keramikmischung mittels Schlämmguss, wobei die Keramikmischung Siliziumcarbid und Borcarbid umfasst, und viertens mit einer Metalllegierung, die Silizium umfasst; und
Beschichten einer Fläche der wenigstens teilweise imprägnierten Faserstruktur mit einem ersten Keramikbeschichtungsmaterial, gefolgt von einem zweiten Keramikbeschichtungsmaterial.

6. Verfahren nach Anspruch 5, wobei die Metalllegierung eine Siliziumlegierung umfasst.

7. Verfahren nach Anspruch 5, ferner umfassend ein Beschichten der Fläche der Faserstruktur mit einem dritten Keramikbeschichtungsmaterial.

8. Verfahren nach Anspruch 5, ferner umfassend ein Verglasen der wenigstens teilweise imprägnierten Faserstruktur mit einer Glasbeschichtung.

9. Verfahren nach Anspruch 5, wobei die Faserstruktur aus Kohlenstofffasern besteht.

10. Produkt, produziert durch ein Verfahren, das die folgenden Schritte umfasst:
wenigstens teilweises Imprägnieren einer Faserstruktur, die Kohlenstofffasern umfasst, erstens mit einem Kohlenstoffgrenzflächenmaterial, zweitens mit Siliziumcarbid mittels chemischer Dampfphaseninfitration (CVI), drittens mit einer Keramikmischung, die Siliziumcarbid und Borcarbid umfasst, mittels Schlämmguss und viertens mit einer Siliziummetallmischung nach dem Imprägnieren mit der Keramikmischung; und
Beschichten einer Fläche der wenigstens teilweise imprägnierten Faserstruktur mit Borcarbid, gefolgt von einem Beschichten der Fläche mit Siliziumcarbid.

11. Produkt nach Anspruch 10, ferner umfassend ein Beschichten der Fläche mit Siliziumcarbid.

12. Produkt nach Anspruch 10, ferner umfassend ein Verglasen der Fläche mit einer Glasbeschichtung.

## Revendications

1. Matériau composite comprenant :
une structure fibreuse imprégnée au moins en partie tout d'abord d'un matériau d'interface en carbone, suivie d'un premier matériau céramique comprenant du carbure de silicium ; suivi d'un mélange de céramiques comprenant au moins deux matériaux parmi le carbure de silicium, le carbure de bore, le carbure de bore riche en carbone, le carbone, le carbure de zirconium, l'oxyde de zirconium, le carbure d'hafnium, le carbure de tantale, le nitrure de tantale ou le nitrure de silicium ; et suivi par un alliage métallique comprenant du silicium ;
un revêtement disposé au moins en partie sur une surface externe de ladite structure fibreuse, ledit revêtement comprenant un revêtement de carbure de bore suivi d'un revêtement de carbure de silicium.

2. Matériau selon la revendication 1, dans lequel ledit revêtement comprend en outre du verre.

3. Matériau selon la revendication 1, dans lequel ledit alliage métallique comprend un alliage de silicium.

4. Matériau selon la revendication 1, dans lequel ladite structure fibreuse est constituée d'au moins l'une d'une fibre de carbone ou d'une fibre de carbure de silicium.

5. Procédé comprenant :
l'imprégnation au moins partielle d'une structure fibreuse en premier lieu par un matériau d'interface de carbone, en deuxième lieu par un premier matériau céramique comprenant du carbure de silicium par CVI, en troisième lieu par un mélange de céramiques par coulée en suspension, dans lequel ledit mélange de céramiques comprend du carbure de silicium et du carbure de bore, et en quatrième lieu par un alliage métallique comprenant du silicium ; et
le revêtement d'une surface de ladite structure fibreuse au moins en partie imprégnée par un premier matériau de revêtement céramique suivi d'un deuxième matériau de revêtement céramique.

6. Procédé selon la revendication 5, dans lequel ledit alliage métallique comprend un alliage de silicium.

7. Procédé selon la revendication 5, comprenant en outre le revêtement de ladite surface de ladite structure fibreuse par un troisième matériau de revêtement céramique.

8. Procédé selon la revendication 5, comprenant en outre la vitrification de ladite structure fibreuse au moins en partie imprégnée par un revêtement de verre.

9. Procédé selon la revendication 5, dans lequel ladite structure fibreuse est constituée de fibre de carbone.

10. Produit fabriqué par un procédé comprenant les étapes consistant à :
imprégner au moins en partie une structure fibreuse comprenant des fibres de carbone en premier lieu par un matériau d'interface en carbone, en deuxième lieu par du carbure de silicium par CVI, en troisième lieu par un mélange de céramiques comprenant du carbure de silicium et du carbure de bore par coulée en suspension et en quatrième lieu par un mélange de silicium métallique après ladite imprégnation avec ledit mélange de céramiques ; et
revêtir une surface de la structure fibreuse au moins en partie imprégnée par du carbure de bore, le tout suivi d'un revêtement de ladite surface par du carbure de silicium.

11. Produit selon la revendication 10, comprenant en outre le revêtement de ladite surface par du carbure de silicium.

12. Produit selon la revendication 10, comprenant en outre la vitrification de ladite surface par un revêtement de verre.
